# EUROPEAN PATENT APPLICATION

(11) **EP 1 302 795 A1**
(43) Date of publication of application: **16.04.2003**
(21) Application number: 01308765.5
(22) Date of filing: 15.10.2001
(51) Int. Cl.: G02B 6/30, G02B 6/42

(54) **Apparatus and method for coupling an optical fibre to an optical waveguide**

(71) Applicant: Agilent Technologies, Inc. (a Delaware corporation), Palo Alto, CA 94303 (US)
(72) Inventor: Meadowcroft, Simon, Stowmarket, Suffolk IP14 1TY (GB)
(74) Representative: Coker, David Graeme

(57) **Abstract**

An apparatus (1) for optically coupling an optical fibre (13) to an optical waveguide (2) includes an optical fibre holder (11) having a V-shaped groove (12) provided in a first reference surface (10) for receiving an optical fibre (13) having a core (14) surrounded by a cladding (15). The optical waveguide (2) is formed of a substrate having a core embedded therein between a pair of cladding layers. The optical waveguide (2) is configured to provide a second reference surface (7) provided either side of a fibre-receiving channel (9) at a depth corresponding to the boundary between a lower edge of the embedded core and an upper edge of a lower one of the cladding layers, the fibre-receiving channel (9) having a width substantially the same as the diameter of the optical fibre (13) and a depth from the second reference surface (7) greater than a radius of the optical fibre (13), such that the optical fibre holder (11) can be positioned on the optical waveguide (2) with the first reference surface (10) abutting the second reference surface (7) and the V-shaped groove (12) being positioned opposite the fibre-receiving channel (9).

## Description

### Field of the Invention

This invention relates to an apparatus and method for coupling an optical fibre to an optical waveguide, and more particularly, though not exclusively, to an apparatus and method for coupling an optical fibre in alignment with an optical waveguide in an accurate and easily manufactured manner.

### Background of the Invention

As is well known, in general, an optical waveguide comprises a substrate block, usually silicon or glass, having an optical waveguide core embedded in an oxide layer above. The optical waveguide core is usually manufactured using lithographic and doping techniques to define the optical waveguide core and a surrounding cladding in the substrate block, similar to a core and cladding of an optical fibre. However, the core and cladding defined in a substrate block are usually defined in more complicated arrangements to provide couplings between two or more such cores or to provide light splitting arrangements in a "branching" arrangement.

However, the core or cores of such an optical waveguide still need to be coupled to one or more optical fibres in order to permit the light to be guided to and from other optical components that may be located at some distance from the waveguide. In order to couple the fibre to a waveguide, it is necessary for the core of the fibre and the core embedded in the waveguide substrate block to be accurately aligned and maintained in that aligned configuration. In some circumstances, alignment to within 1 - 1.5 µm needs to be achieved.

Known methods of coupling optical fibres to waveguides consist of mounting the optical fibre in a holder, actively aligning the fibre to the embedded core and then gluing the holder in position. However, gluing the holder in position makes it difficult to maintain the required alignment accuracy. Other known methods require complicated etched structures in the waveguide to achieve the required accuracy.

### Brief Summary of the Invention

The present invention therefore seeks to provide an apparatus and method for an optical fibre to an optical waveguide, which overcomes, or at least reduces the above-mentioned problems of the prior art.

Accordingly, in a first aspect, the invention provides an apparatus for optically coupling an optical fibre to an optical waveguide, the optical fibre having a core surrounded by a cladding, the apparatus comprising an optical fibre holder having a V-shaped groove provided in a first reference surface thereof for receiving the optical fibre and the optical waveguide comprising a substrate having a core embedded therein between a pair of cladding layers, wherein a coupling region of the optical waveguide is configured to provide a second reference surface provided either side of a fibre-receiving channel at a depth corresponding to the boundary between a lower edge of the embedded core and an upper edge of a lower one of the cladding layers, the fibre-receiving channel having a depth from the first reference surface greater than a radius of the optical fibre, such that the optical fibre holder can be positioned on the optical waveguide with the first reference surface abutting the second reference surface and the V-shaped groove being positioned opposite the fibre-receiving channel.

Preferably, the fibre-receiving channel has a width greater than a diameter of the optical fibre.

In a preferred embodiment, the V-shaped groove is defined by a pair of sidewalls arranged so that, when the optical fibre is positioned in the V-shaped grove, sides of the optical fibre contact the sidewalls such that the core of the optical fibre is located at a position substantially in the plane of the first reference surface.

The V-shaped groove is preferably defined by a pair of sidewalls arranged so that, when the optical fibre is positioned in the V-shaped grove, sides of the optical fibre contact the sidewalls such that the core of the optical fibre is located at a position within the V-shaped groove with an outer edge of the core in the plane of the first reference surface.

The V-shaped groove is preferably defined by sides subtending an angle of between 50° and 60°, most preferably about 54.74°.

Preferably, the apparatus is an optical coupler.

According to a second aspect, the invention provides a method for coupling an optical fibre to an optical waveguide, the optical fibre having a core surrounded by a cladding, and the optical waveguide comprising a substrate having a core embedded therein between a pair of cladding layers, the method comprising the steps of providing an optical fibre holder having a V-shaped groove provided in a first reference surface thereof for receiving the optical fibre, etching a coupling region of the optical waveguide to provide a second reference surface at a depth corresponding to the boundary between a lower edge of the embedded core and an upper edge of a lower one of the cladding layers, etching a fibre-receiving channel from the second reference surface, the fibre-receiving channel having a width substantially the same as the diameter of the optical fibre and a depth from the second reference surface greater than a radius of the optical fibre, mounting the optical fibre within the V-groove of the optical fibre holder, and positioning the optical fibre holder on the optical waveguide with the first reference surface abutting the second reference surface and the V-shaped groove being positioned opposite the fibre-receiving channel, such that the core of the optical fibre is substantially aligned with the core of the waveguide.

### Brief Description of the Drawings

An embodiment of the invention will now be more fully described, by way of example, with reference to the drawings, of which:
FIG. 1 shows a schematic perspective view of an optical waveguide according to an embodiment of the present invention, with an optical fibre holder shown positioned therein in dotted line, but without the optical fibre in position ;
FIG. 2 shows an end view of the optical waveguide of FIG. 1 with the optical fibre holder and the optical fibre in position;
FIG. 3 shows a plan view of the optical waveguide of FIG. 1;
FIG. 4 shows a cross sectional view along line IV - IV of FIG. 1; and
FIG. 5 shows a cross sectional view along line V - V of FIG. 1.

### Detailed Description of the Drawings

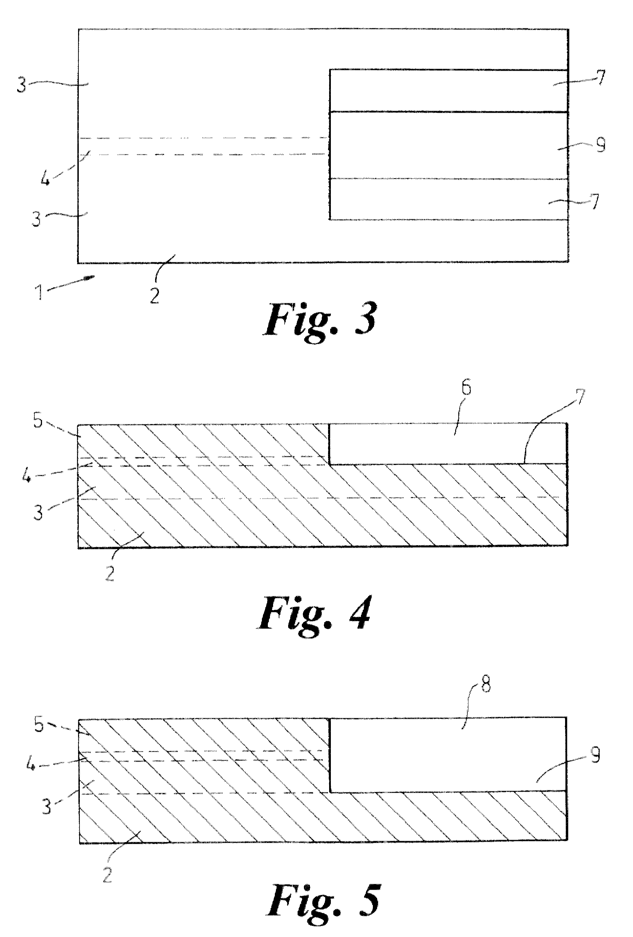

Thus, in a preferred embodiment, as best shown in FIGs. 3, 4 and 5 of the drawings, an optical waveguide 1 is formed of a substrate of silicon 2 having a first cladding layer 3 of silicon oxide deposited thereon. The silicon oxide layer 3 is doped over a small width and thickness to provide a core 4 of lower refractive index than the first cladding layer 3 and a further cladding layer 5 of silicon oxide is then deposited over the core 4 to embed the core 4 within the cladding layers 3 and 5.

As best shown in FIG. 4, in accordance with a preferred embodiment of the invention, a region 6 of the waveguide 1 is then defined lithographically and etched away as far as the boundary between the core 4 and the cladding layer 3 below the core 4. The region 6 of etching extends perpendicularly to the core 4 across the width of the waveguide 1 and longitudinally to the end of the waveguide 1 such that the optical fibre holder can fit therewithin, as will be described further below. This first etching step is preferably carried out using plasma etching, for example, Reactive Ion Etching (RIE), or using ion beam milling and the etching process is monitored using mass spectroscopy to determine when the composition of the waveguide changes indicating that the boundary between the core 4 and the cladding layer 3 has been reached. At this point the first etching step is stopped.

As shown in FIG. 5, a further region 8 for a second etching step is then defined lithographically to define an area extending from the core 4 that has been uncovered in the first etching step to the end of the waveguide 1 and having a width substantially the same as, or greater than, the width of the optical fibre. This further region 8 is then etched away to a depth greater than the radius of the optical fibre.

The first etching step therefore defines a reference surface 7 at the depth of the boundary between the core and the cladding layer below the core, and the second etching step defines a channel 9 within the reference surface 7 having a width exactly dimensioned for receiving the optical fibre so as to align it with the embedded core of the waveguide and deep enough for half the diameter of the optical fibre to fit within.

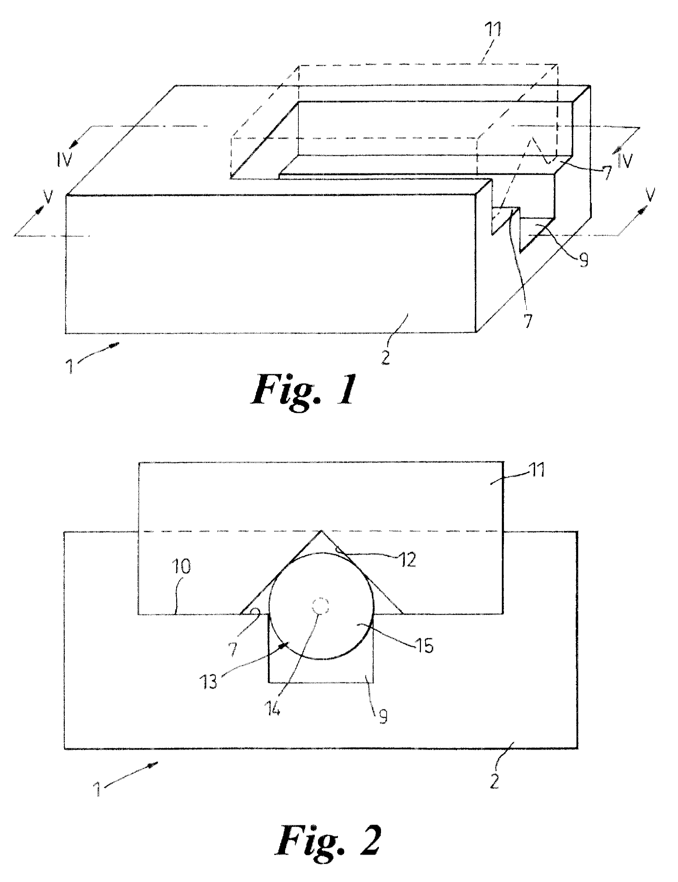

As best shown in FIGs. 1 and 2, the reference surface 7 provides a support for a reference surface 10 of an optical fibre holder 11 to abut against within the waveguide 1. The optical fibre holder 10 is provided with a V-groove 12 in the reference surface 10 for receiving therein an optical fibre 13 having a core 14 surrounded by a cladding 15. The V-groove 12 has precisely predetermined dimensions, based on the size of the optical fibre 13, so that, when the optical fibre 13 is positioned within the V-groove 12 with the outer surfaces of the optical fibre 13 contacting the sides of the V-groove 12, the core 14 of the optical fibre 13 is positioned precisely at a position within the V-groove 12 such that an outer edge of the core 14 is in the plane of the reference surface 10. The V-groove 12 has an internal angle of between 50° and 60°, preferably 54.74°, and, for one common optical fibre has an outer width of 0.158mm. Once the optical fibre 13 is positioned within the V-groove 12, it is affixed in position, in any desired manner, for example with adhesive. The tolerances in this gluing step can be maintained to a high level since the optical fibre 13 is kept in contact with the sides of the V-groove 12.

After the optical fibre 13 is fixed in position in the optical fibre holder 11, the holder 11 is simply positioned in the etched region of the waveguide 1 such that the reference surfaces 7 and 10 abut and the outer part of the optical fibre 13 extends into the channel 9, this locating the core 14 of the optical fibre 13 substantially at the exact depth of the embedded core of the waveguide 1. By making the channel 9 the exact width of the diameter of the optical fibre 13, the optical fibre 13 is located substantially precisely in a perpendicular direction so that the core 14 of the optical fibre 13 is aligned with the embedded core of the waveguide 1.

It will be appreciated that although only one particular embodiment of the invention has been described in detail, various modifications and improvements can be made by a person skilled in the art without departing from the scope of the present invention.

## Claims

1. An apparatus for optically coupling an optical fibre (13) to an optical waveguide (1), the optical fibre (13) having a core (14) surrounded by a cladding (15), the apparatus comprising an optical fibre holder (11) having a V-shaped groove (12) provided in a first reference surface (10) thereof for receiving the optical fibre (13) and the optical waveguide (1) comprising a substrate (2) having a core (4) embedded therein between a pair of cladding layers (3, 5), wherein a coupling region (6) of the optical waveguide (1) is configured to provide a second reference surface (7) provided either side of a fibre-receiving channel (9) at a depth corresponding to the boundary between a lower edge of the embedded core (4) and an upper edge of a lower one of the cladding layers (3), the fibre-receiving channel (9) having a width substantially the same as the diameter of the optical fibre (13) and a depth from the second reference surface (7) greater than a radius of the optical fibre (13), such that the optical fibre holder (11) can be positioned on the optical waveguide (1) with the first reference surface (10) abutting the second reference surface (7) and the V-shaped groove (12) being positioned opposite the fibre-receiving channel (9).

2. An apparatus for optically coupling an optical fibre to an optical waveguide according to claim 1, wherein the second reference surface is defined between at least a pair of walls between which the optical fibre holder is positioned.

3. An apparatus for optically coupling an optical fibre to an optical waveguide according to claim 1, wherein the V-shaped groove is defined by a pair of sidewalls arranged so that, when the optical fibre is positioned in the V-shaped grove, sides of the optical fibre contact the sidewalls such that the core of the optical fibre is located at a position substantially in the plane of the first reference surface.

4. An apparatus for optically coupling an optical fibre to an optical waveguide according to claim 3, wherein the V-shaped groove is defined by a pair of sidewalls arranged so that, when the optical fibre is positioned in the V-shaped grove, sides of the optical fibre contact the sidewalls such that the core of the optical fibre is located at a position within the V-shaped groove with an outer edge of the core in the plane of the first reference surface.

5. An apparatus for optically coupling an optical fibre to an optical waveguide according to either claim 3 or claim 4, wherein the V-shaped groove is defined by sides subtending an angle of between 50° and 60°.

6. An apparatus for optically coupling an optical fibre to an optical waveguide according to claim 5, wherein the V-shaped groove is defined by sides subtending an angle of about 54.74°.

7. An optical coupler comprising apparatus for optically coupling an optical fibre to an optical waveguide according to any preceding claim, further comprising an optical fibre mounted within the V-groove of the optical fibre holder such that a core of the optical fibre is substantially aligned with the core of the waveguide.

8. A method for coupling an optical fibre (13) to an optical waveguide (1), the optical fibre (13) having a core (14) surrounded by a cladding (15), and the optical waveguide (1) comprising a substrate (2) having a core (4) embedded therein between a pair of cladding layers (3, 5), the method comprising the steps of:
providing an optical fibre holder (11) having a V-shaped groove (12) provided in a first reference surface (10) thereof for receiving the optical fibre (13);
etching a coupling region (6) of the optical waveguide (1) to provide a second reference surface (7) at a depth corresponding to the boundary between a lower edge of the embedded core (4) and an upper edge of a lower one of the cladding layers (3);
etching a fibre-receiving channel (9) from the second reference surface (7), the fibre-receiving channel (9) having a width substantially the same as the diameter of the optical fibre (13) and a depth from the second reference surface (7) greater than a radius of the optical fibre (13);
mounting the optical fibre (13) within the V-groove (12) of the optical fibre holder (11); and
positioning the optical fibre holder (11) on the optical waveguide (1) with the first reference surface (10) abutting the second reference surface (7) and the V-shaped groove (12) being positioned opposite the fibre-receiving channel (9), such that the core (14) of the optical fibre (13) is substantially aligned with the core (4) of the waveguide (1).

9. A method for coupling an optical fibre to an optical waveguide according to claim 8, wherein the V-shaped groove is defined by a pair of sidewalls arranged so that, when the optical fibre is positioned in the V-shaped grove, sides of the optical fibre contact the sidewalls such that the core of the optical fibre is located at a position substantially in the plane of the first reference surface.

10. A method for coupling an optical fibre to an optical waveguide according to claim 9, wherein the V-shaped groove is defined by a pair of sidewalls arranged so that, when the optical fibre is positioned in the V-shaped grove, sides of the optical fibre contact the sidewalls such that the core of the optical fibre is located at a position within the V-shaped groove with an outer edge of the core in the plane of the first reference surface.

11. A method for coupling an optical fibre to an optical waveguide according to either claim 9 or claim 10, wherein the V-shaped groove is defined by sides subtending an angle of between 50° and 60°.

12. A method for coupling an optical fibre to an optical waveguide according to claim 11, wherein the V-shaped groove is defined by sides subtending an angle of about 54.74°.
